# EUROPEAN PATENT APPLICATION

(11) **EP 3 633 187 A1**
(43) Date of publication of application: **08.04.2020**
(21) Application number: 18805713.7
(22) Date of filing: 22.05.2018
(51) Int. Cl.: F03D 5/04, F03D 7/00

(54) **WIND ENERGY CONVERSION MODULE**

(30) Priority: 22.05.2017 RU 2017117569
(71) Applicant: Sila Prirodi Limited Liability Company (Sila Prirodi LLC), Moscow, 108811 (RU)
(72) Inventor: YAKIMCHUK, Vyacheslav Antonovic, Moscow 142704 (RU)
(74) Representative: Berggren Oy, Helsinki & Oulu
(86) International application number: PCT/RU2018/000319
(87) International publication number: WO 2018/217127

(57) **Abstract**

The invention relates to the field of energy, and more specifically, to wind power plants that generate electrical energy by using air flow force. The wind energy conversion module comprises a casing 9 configured to move along the guide belt 1, including installed in a casing 9, at least, one wind energy receiver 10 in the shape of a kite mounted on the casing, an orientation drive 10 of the wind energy receiver relative to the wind and the casing 9, a control system, as well as a electricity generator 6 configured to generate electricity when the casing 1 moves along the guide belt 1 and at force interaction with the contact guide rail 3 associated with the guide belt 1. The control system is configured to change the modules speed by changing the braking force of the electricity generator 6. The invention allows to ensure a high wind energy efficiency by controlling the modules speed.

## Description

### Field of the invention

The invention relates to the field of energy, and more specifically, to wind power plants that generate electrical energy by using air flow force.

### Background of the invention

In the prior art, a wind energy conversion module for a guide belt is known, which is a carriage configured to move along a path made of a frame in the shape of a truss, comprises wing profiles mounted at the carriage, the carriage being suspended by means of rollers (WO 2016150561 A).

A wind energy conversion module for a rail track is also known, comprising a trolley configured to move along a rail track, a sailing wind energy receiver mounted on a trolley, and a mechanical electricity generator (EP 2078853 A1).

A wind energy conversion module for a guide belt is also known, comprising a trolley configured to move along the rail track due to wind energy, energy receivers in the shape of aerodynamic profile wings mounted on the trolley, mechanical drives for orienting the wing profiles relative to the wind and the casing (FR 2297333 A1).

A wind energy conversion module for a guide belt is also known, the module comprises a casing configured to move along the guide belt, at least one wind energy receiver mounted on the casing, an orientation drive of the wind energy receiver relative to the wind and the casing, a control system comprising an operating algorithm and configured for changing the forces created by the wind when blowing the wind energy receiver using the orientation drive of the wind energy receiver and the generator rigidly mounted in the casing (WO 2016154757 A1).

Common disadvantages of technical solutions known from the prior art are the following:
- inability to control the speed of the module, which leads to the inability to obtain the maximum wind energy efficiency of the module in each moment of time under the condition of changing air flow.
- narrow range of wind speeds, at which the system is effective due to the impossibility of changing the wing area and the installed generator capacity. The traditional wind generator operates with optimum performance, according to some estimates, for not more than 15% of the time. Other days, the wind is too weak for operation or too strong sometimes.
- achieving an effective operation mode only at high speed, resulting in the generation of high capacity infra sound waves, danger to animals and people, mass death of birds, the need to create a restricted area around the plant;
- high loading of structural elements, which causes to use expensive structural materials and technologies.
- large dimensions and weight of structural parts, the transportation and installation of which requires unique transport and installation operations.
- low maintainability of structures; the replacement of any large part requires repeated unique transport and installation operations.
- loss of operability of the structure when any part fails, which causes a downtime until the repair is completed.

The closest to the proposed is a wind energy conversion module, comprising a casing configured to move along the guide belt, at least one wind energy receiver in the shape of a kite mounted on the casing, an orientation drive of the wind energy receiver relative to the wind and the casing, a control system, as well as a electricity generator configured to generate electricity when the casing moves along the guide belt and at force interaction with the contact guide rail associated with the guide belt (RU 2451826 C2, publ. May 27, 2012). The known module has the control system configured to control the angle of attack of kites due to distortion of the shape of the attached cable.

The inability to control the speed of the module can also be the disadvantages of this module, which leads to the inability to obtain the maximum wind energy efficiency of the module in each moment of time under the condition of changing air flow.

### Summary of the invention

The object of the claimed technical solution is the creation of a wind energy conversion module, devoid of the above disadvantages and having an additional number of advantages with increased energy efficiency.

The technical result achieved by the claimed technical solution is to provide a high coefficient of wind energy usage (CWEU) by controlling the speed of the modules.

The technical result is achieved by a wind energy conversion module comprising a casing configured to move along the guide belt, at least one wind energy receiver mounted on the casing, an orientation drive of the wind energy receiver relative to the wind and the casing, a control system, and an electrical energy generating device made configured to generate electricity during movement of the casing along the guide belt and force interaction with a contact guide associated with the guide belt, wherein, according to the invention, the control system is configured to change the speed of the modules by changing the braking force of the electrical energy generating device.

Particular embodiments of module are possible:
- the wind energy receiver is preferably made in the shape of a wing profile;
- wherein the wind energy receiver can be made in the shape of a wing with a changing aerodynamic profile and/or area;
- the wind energy receiver can also be made in the shape of at least one sail;
- the wind energy receiver can be made in the shape of a wing with a composite aerodynamic profile, which includes the main profile, and at least one tilt flap;
- the wind energy receiver is preferably attached to the casing with its middle part, so that a cantilever load on the casing from the wind energy receiver, when blown by the wind, is compensated;
- when the module moves horizontally along the guide belt, the wind energy receiver is oriented vertically;
- when the module moves vertically along the guide belt, the wind energy receiver is oriented horizontally;
- the casing can be made configured to movement along the rail track, in particular, along the monorail;
- casing movement along the guide belt can be implemented with magnetic bearing;
- the electrical energy generating device may be of a rotary type, and the force interaction with the contact guide associated with the guide belt is mechanical;
- in another embodiment, the electrical energy generating device may be a movable part of a linear electric generator, and the force interaction with the contact guide associated with the guide belt is electromagnetic;
- the movable part of the linear electric generator can be made in the shape of a short rail configured to generate electricity when the module is moving due electromagnetic interaction with a contact guide made in the shape of a rail of soft magnetic steel with windings on the teeth;
- wherein the control system comprises an electronic control module, configured to bias the teeth of the short rail and gear rail of the contact guide;
- mechanical force interaction can be performed by means of gearing formed by a gear and a contact guide made in the shape of a fixed gear rail;
- the electricity generator can be made in the shape of a valve-inductor type generator;
- the control system can be configured to translate the electricity generator into motor mode;
- the wind speed and wind direction sensor can be installed on the casing;
- wherein the control system is configured to receive information from the sensors and orient the wind energy receiver in an optimum way by means of the drive orientation of the wind energy receiver, in accordance with an algorithm using information from the sensors;
- drive of the wind energy receiver is preferably a servo drive;
- the control system may include an auxiliary aerodynamic controller for changing the orientation of the wind energy receiver;
- the control system can also be configured to changing the aerodynamic profile, and/or changing the area of the wing, up to the transfer to the vane mode;
- the casing comprises mounted snow removal equipment for cleaning the guide belt and the contact guide.

Special embodiment cases of the claimed technical solution are not confined to the disclosed above cases.

### Brief description of drawings

The essence of the claimed technical solution is illustrated by graphic documents.

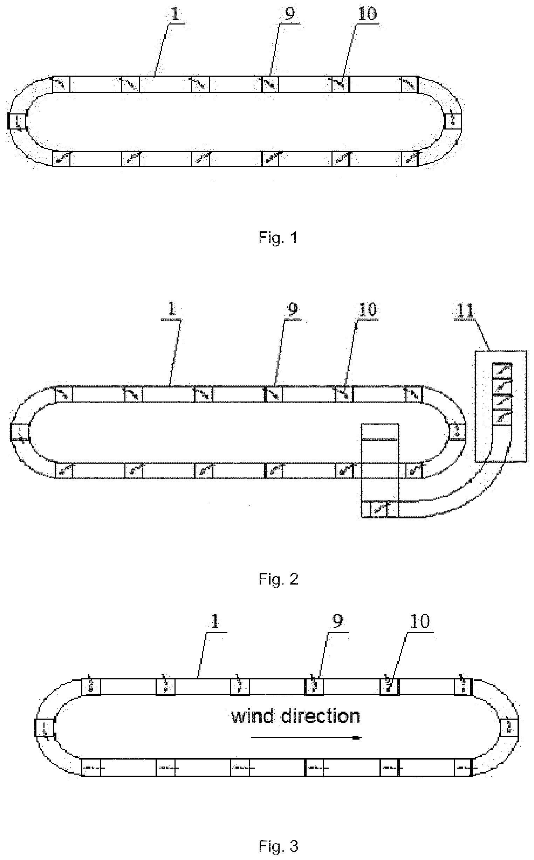

Fig. 1 shows a general diagram of a wind energy conversion system together with wind energy conversion modules, a basic version of a rail plant.
Fig. 2 - similar, embodiment of the rail plant with the ability to add modules.
Fig. 3 - plant embodiment for crosswind operation.

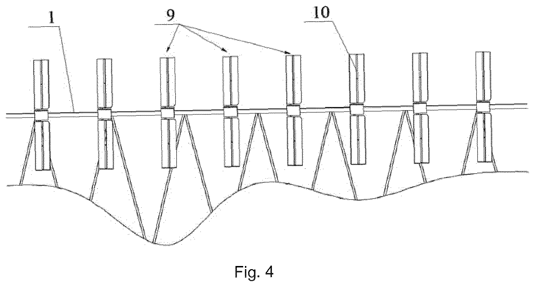

Fig. 4 shows an embodiment of a wind energy conversion system, wherein a guide belt section is mounted on a supporting structure in the shape of an access bridge, wherein the wind energy conversion modules are oriented vertically.
Fig. 5 shows an embodiment of a wind energy conversion module, wherein the electrical energy generating device is a moving part of a linear electric generator configured to interact electromagnetically with a contact guide.
Fig. 6 shows an embodiment of a wind energy conversion module, wherein the electrical energy generating device is a rotary type electric generator.
Fig. 7 shows an embodiment of a wind energy conversion system wherein the guide belt is made in the shape of a monorail.
Fig. 8 shows an embodiment of a wind energy conversion module, wherein the ability to move along a guide belt is due to magnetic interaction of wind energy conversion modules with a guide belt.

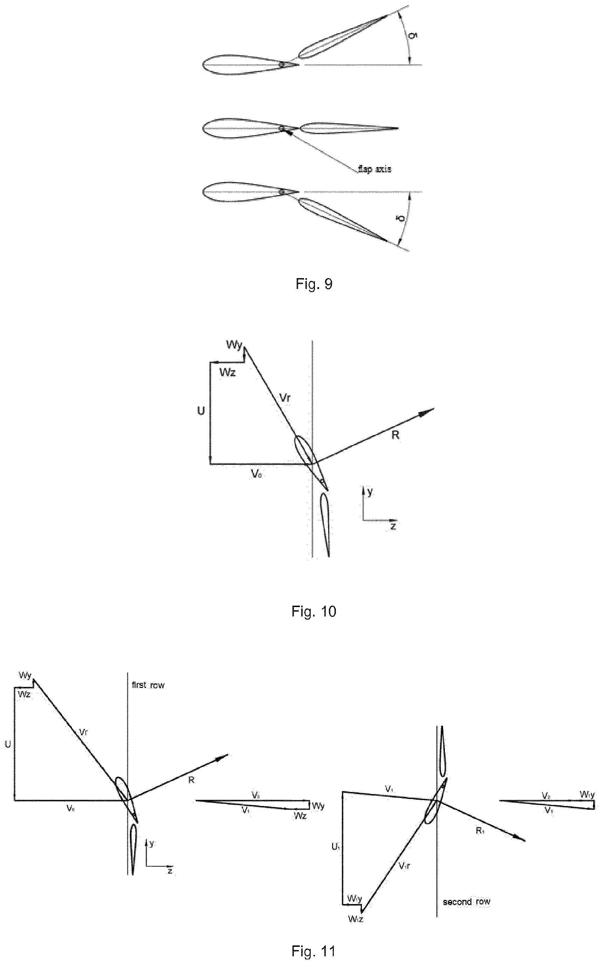

Fig. 9 shows an embodiment of a wind energy conversion module, wherein the wind energy receiver is made in the shape of a wing with a composite aerodynamic profile including a main profile and at least one tilt flap.
Fig. 10 and 11 show various speed triangles of wind energy receivers.

### Preferred examples of embodiments

Below are theoretical grounds of the embodiment of the claimed module on the example of wings used as wind energy receivers.

There is a possible embodiment of the module with orienting rectilinear section of movement of the wings across air flow.

The aerodynamic calculation of the system shows that at increasing wing speed across the flow, the power from one square meter grows up to high speeds (from 15 to 200 m/s depending on the aerodynamic quality of the wing).

The dependence is nearly linear. Wherein the load on the wing structure is also growing.

The main influence criterion in this case is speed (the ratio of the speed of the wing across the flow to the wind speed).

With a speed of less than 2, the aerodynamic quality of the wing plays a small role, the carrying capacity of the wing profile plays a large role, with a speed of more than 2, the aerodynamic quality becomes important, with a value of more than 5 it is critically important. Moreover, the lower the wing speed, the greater the flow down-wash.

For the designed plant, the speed of the wing should be limited to:
10 m/s. - 15 m/s - for safety reasons, environmental friendliness, psychological comfort;
60 m/s - for aerodynamic noise;
5 m/s - 30 m/s - for centrifugal overloads when turning.

In practice, when organizing the plant control, the highest speed of the wing, taking into account above limitations should be reached.

The ability of the wing to create aerodynamic forces depends on the wing setting angle relative to the local air flow. Local (in the area of the wing) airflow differs from the natural wind flow by the vector values of the wing speed, braking and the tilt of the flow by the wind generator.

### Control parameters.

### Input parameters:

- apparent wind speed;
- apparent wind direction;
- actual wind speed;
- actual wind direction;
- module speed;
- distance between modules;
- module passing turn over point.

### Controlled parameters:

- wing setting angle relative to the apparent wind;
- flap setting angle relative to the main wing profile (when using a wing with a flap);
- wing area;
- module speed;

### Control parameters and methods:

The wing setting angle relative to the apparent wind is set using the wing rotation servo drive or with the help of a servo-driven auxiliary aerodynamic surface (stabilizer). Apparent wind is a wind perceived by a directly moving wing, the result of the addition of all speed vectors arising from the operation of the wind generator with the actual wind vector.

The control object is to maintain a constant optimum wing setting angle relative to a changing apparent wind, when the aerodynamic force limit for the wing is reached, at the wind increase, gradually reduce the setting angle according to the algorithm (for example, 1° per 1 m/s of wind). When the module is turned from the windward row to the leeward row, the servo-driver turns the wing angle to the opposite to turn the wing thrust vector. Direction sensor, wind speed sensor and a turn point sensor provide initial data. In the case of using a servo stabilizer, it is a wind direction sensor and an aerodynamic amplifier at the same time.

The flap setting angle relative to the main wing profile (when using a wing with a flap) is set using the flap servomotor or with the help of a servo-driven auxiliary aerodynamic surface (stabilizer).

The control object is to maintain a constant optimum flap setting angle relative to the main wing profile, when the aerodynamic force limit for the wing is reached, at the wind increase, gradually reduce the setting angle according to the algorithm (for example, 3° per 1 m/s of wind). When the module is turned from the windward row to the leeward row, the servo-driver turns the flap angle to the opposite to turn the wing thrust vector. Direction sensor, wind speed sensor and a turn point sensor provide initial data. In the case of using a servo stabilizer, it is a wind direction sensor and an aerodynamic amplifier at the same time and performs two functions - controlling the flap setting angle and controlling the wing setting angle as a whole.

The wing area is set by the system depending on the specific wind conditions in order to achieve the optimum value of the total area of the operating wings if the system does not use a change in the number of operating modules, and the electric generators have a power reserve.

The module speed is controlled by changing the braking force of the generator. The braking torque of the generator is changed by electronic control of the generator from full braking to a negative value, i.e. before switching to motor mode. The generator ensures braking converting the mechanical power of movement into electrical power. With full braking, the mechanical capacity is zero due to the lack of speed. With zero braking, the speed is maximum, but the mechanical capacity is also zero due to the lack of force. Between these two extreme cases, for each wind condition, there is an optimality point, at which the mechanical power and electric power are maximum. The generator control system changes the power taken by the generator and, therefore, the braking torque created by the generator by electronic control of the current pulses supplied to the generator coils and taken from the coils. In the simplest case, the generator coils operate directly to the alternating current network, wherein the synchronization of the modules speed with the frequency of the alternating current network is automatically ensured.

### Control objects:

- ensuring the maximum possible coefficient of wind energy usage (CWEU) with the help of the module as a whole. For each total wing area, there is an optimum speed (the ratio of the wing speed along the belt and the actual wind speed), at which the CWEU of the wind generator is maximum. The speed control system receives data from speed sensors and actual or apparent wind direction sensors, data from the speed sensors of the module, data about the position of other modules, adjusts the braking torque of the generator, constantly maintaining optimum speed, taking into account the following restrictions: maximum allowable speed in this section of belt, uniform distribution of modules on the belt, preventing collision of modules, the necessity to maintain a given frequency of the generated alternating direct current, the necessity to consider the speed, at which the generator electrical efficiency is maximum;
- ensuring the ability of modules breakaway at start-up. Most generators have a significant breakaway force that prevents the wind generator from starting at light wind. The vane-induction technology allows the control system, receiving data from the module speed sensor, to minimize the breakaway force to facilitate start-up;
- ensuring emergency shut-down of the modules. If the wind speed exceeds the safe operation limits, the control system, receiving data from actual or apparent wind speed sensors, performs complete braking of the generators of all modules;
- ensuring the performance of transport operations: input of modules to the belt, output of module from the belt, transportation of modules to the depot.

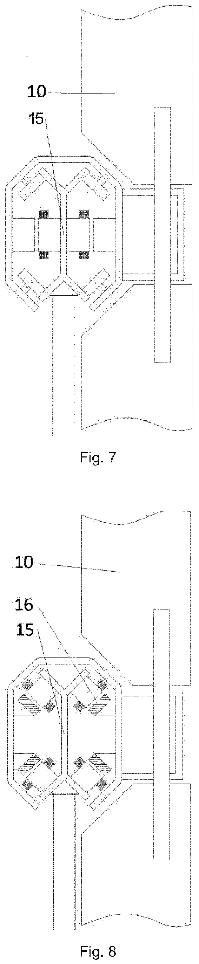

The wind energy conversion module comprises a casing 9 configured to move along the guide belt 1, at least one wind energy receiver 10 that receives wind energy mounted on the casing 9. In this case, the wind energy receiver 10 can be made in the shape of a wing profile or at least one sail, or in the shape of a wing with a composite aerodynamic profile including a main profile and at least one tilt flap. It is also possible to attach the wind energy receiver 10 to the casing 9 with its middle part, so that the cantilever load on the casing 9 from the wind energy receiver 10 was compensated by wind at blowing. With the possible vertical movement of the wind energy conversion module along the guide belt 1, the wind energy receiver 10 is oriented horizontally. And with the possible horizontal movement of the wind energy conversion module along the guide belt 1, the wind energy receiver 10 is oriented vertically. In this case, the casing 9 itself can be made configured to movement along the rail track or monorail. It may be possible to move the casing 9 along the guide belt 1 by means of a magnetic bearing (fig. 8).

The orientation drive (not shown) of the wind energy receiver 10 relative to the wind and the casing 9, comprises a control system with operation algorithm and configured to change the forces generated by the wind when blowing the wind energy receiver 10, using the orientation drive of the wind energy receiver 10, as well as electricity generator 6, rigidly mounted in the casing 9. The orientation drive of the wind energy receiver 10 can be made in the shape of a servo drive.

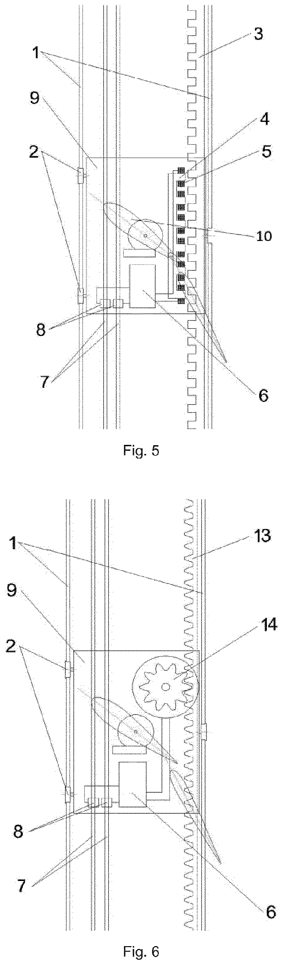

In this case, the electricity generator 6 can be a movable part of the linear electric generator (fig. 5), configured to electromagnetic interaction with the contact guide 3, wherein the movable part of the linear generator is made in the shape of a short rail 4 with windings on the teeth 5, configured to generating electricity when the module moves through electromagnetic interaction with the contact guide 3 and transferring electricity to the network wires 7 through contact devices 8, made in the shape of a rail made of soft magnetic steel. Also, the electricity generator 6 may be a rotary type electric generator (fig. 6), wherein the force interaction is mechanical, and the mechanical force interaction is performed by means of a gear transmission - rolling contact rail made in the shape of a fixed gear rail 13 with a gear 14 and transferring electricity to the network through wires 7 through contact devices 8 made in the shape of a rail made of soft magnetic steel. Electricity generator 6 can be also made in the shape of a vane-inductor type generator.

Wherein, in any case, the control system can be configured to change the force interaction of the electricity generator 6 and the contact guide 3. Control system can be configured to translate the electricity generator 6 into motor mode.

The control system can receive the information from the sensors and orient the wind energy receiver 10 in an optimum way by means of the drive orientation of the wind energy receiver 10, in accordance with an algorithm using information from the sensors. It is possible to use sensors, such as a wind speed sensor and a wind direction sensor (not shown) mounted on the casing 9. Also, control system may include an auxiliary aerodynamic controller (not shown) for changing the orientation of the wind energy receiver 10. In case of exceeding the wind speed specified by the algorithm the control system can reduce aerodynamic forces by changing the setting angles of the wind energy receiver 10 relative to the wind, up to the transfer to the vane mode.

The control system can set the optimum aerodynamic profile and wing area for different wind speeds.

The modules within the wind energy conversion system operate as follows.

The aerodynamic force occurs when the wind blows the wind energy receivers 10, mounted on the modules. This force moves the module along the guide belt 1, wherein the wind energy receiver 10 is constantly oriented in the direction of the wind to create the best thrust in each section of the guide belt, depending on the direction of the wind. The electricity generator 6 interacts with the contact guide 3, which in turn is connected with the guide belt 1. As a result of the work performed by the force arising from the interaction of the generator 6 and the contact guide 3, the generator 6 generates an electric current, which in turn is transmitted to the network laid along the guide belt 1. Wherein, depending on the parameters of the generated electricity, the control system continuously controls the speed of the module itself, since the generator 6 is actually a brake for moving the module under the influence of wind force.

The control system also controls the number of modules displayed at a particular time on the guide belt 1. At the same time, for example, for diagnostics or maintenance of the module, it is driven into the depot without shut-down of the entire system and all modules removed at a given time. For this, preliminary, the section of the belt 1 is switched from the movement along a closed contour to the section following to the depot, taking into account the current position of the required module. Wherein, if the wind energy at the moment or in this area is not enough for such a manoeuvre, then the electricity generator 6 is transferred to the motor mode, consuming electricity from the network. Similarly, special purpose modules, for example, diagnostic or snow removal, are guided on the guide belt 1. It should be noted that the above operation of the system in the general case does not depend on how exactly the guide belt 1, the generator 6, the type of the module bearing on the guide belt 1 in their particular cases is made.

## Claims

1. A wind energy conversion module comprising:
a casing (9) configured for movement along the guide belt (1),
at least one wind energy receiver (10) mounted on the casing (9),
an orientation drive of the wind energy receiver (10) relative to the wind and the casing (9),
a control system, and
an electrical energy generating device (6) configured to generate electrical energy during movement of the casing (9) along the guide belt (1) and during a force interaction with a contact guide (3) associated with the guide belt (1),
**characterized in that** the control system is configured to change the speed of the modules by changing the braking force of the electrical energy generating device (6).

2. The wind energy conversion module according to claim 1, wherein the wind energy receiver (10) is made in the shape of a wing profile.

3. The wind energy conversion module according to claim 1, wherein the wind energy receiver (10) is made in the shape of a wing with a changing aerodynamic profile and/or is made in the shape of a wing with a changing area profile.

4. The wind energy conversion module according to claim 1, wherein the wind energy receiver (10) is made in the shape of at least one sail.

5. The wind energy conversion module according to claim 2, wherein the wind energy receiver (10) is made in the shape of a wing with a composite aerodynamic profile including a main profile and at least one tilt flap.

6. The wind energy conversion module according to claim 1, wherein wind energy receiver (10) is attached to the casing (9) with its middle part, so that a cantilever load on the casing from the wind energy receiver, when blown by the wind, is compensated.

7. The wind energy conversion module according to claim 1, wherein when the module moves horizontally along the guide belt (1), the wind energy receiver (10) is oriented vertically.

8. The wind energy conversion module e according to claim 1, wherein when the module moves vertically along the guide belt (1), the wind energy receiver (10) is oriented horizontally.

9. The wind energy conversion module according to claim 1, wherein the casing (9) is arranged to move along a rail track or along a monorail.

10. The wind energy conversion module according to claim 1, wherein the possibility of moving the casing (9) along the guide belt is implemented by magnetic bearing.

11. The wind energy conversion module according to claim 1, wherein the electrical energy generating device (6) is an electrical energy generating device of a rotary type, wherein the force interaction with the contact guide associated with the guide belt is mechanical.

12. The wind energy conversion module according to claim 1, wherein the electrical energy generating device (6) is a movable part of a linear electric generator, and the force interaction with the contact guide (3) associated with the guide belt is electromagnetic.

13. The wind energy conversion module according to claim 12, wherein the movable part of the linear electric generator is made in the shape of a short rail configured to generate electricity when the module is moving due electromagnetic interaction with a contact guide made in the shape of a rail of soft magnetic steel with windings on the teeth.

14. The wind energy conversion module according to claim 13, wherein the control system comprises an electronic control module, configured to bias the teeth of the short rail and gear rail of the contact guide.

15. The wind energy conversion module according to claim 11, wherein the mechanical force interaction can be performed by means of gearing formed by a gear and the contact guide made in the shape of a fixed gear rail.

16. The wind energy conversion module according to claim 1, wherein the electrical energy generating device (6) is made in the shape of a vane-inductor type generator.

17. The wind energy conversion module according to claim 1, wherein the control system is configured to transfer the electrical energy generating device to the motor mode.

18. The wind energy conversion module according to claim 1, wherein a wind speed sensor and a wind direction sensor are installed on the casing (9).

19. The wind energy conversion module according to claim 18, wherein the control system is configured to receive information from the sensors and orient the wind energy receiver (10) in an optimum way by means of the drive orientation of the wind energy receiver, in accordance with an algorithm using information from the sensors.

20. The wind energy conversion module according to claim 19, wherein the drive of the wind energy receiver (10) is a servo drive.

21. The wind energy conversion module according to claim 19, wherein the control system comprises an auxiliary aerodynamic controller for changing the orientation of the wind energy receiver.

22. The wind energy conversion module according to claim 19, wherein the control system is configured to changing the aerodynamic profile, and/or changing the area of the wing, up to the transfer to the vane mode.

23. The wind energy conversion module according to claim 1, wherein the casing (9) comprises mounted snow removal equipment for cleaning the guide belt (1) and the contact guide (3).
